# EUROPEAN PATENT APPLICATION

(11) **EP 4 625 516 A2**
(43) Date of publication of application: **01.10.2025**
(21) Application number: 25150893.3
(22) Date of filing: 09.01.2025
(51) Int. Cl.: H01M 4/13, H01M 4/139, H01M 10/0587, H01M 10/613, H01M 10/654

(54) **ELECTRODE ASSEMBLY AND RECHARGEABLE BATTERY INCLUDING THE SAME**

(30) Priority: 23.02.2024 KR 20240026732
(71) Applicant: SAMSUNG SDI CO., LTD., Yongin-si, Gyeonggi-do 17084 (KR)
(72) Inventor: Lee, Moo Dong, Yongin-si 17084 (KR)
(74) Representative: Michalski Hüttermann & Partner Patentanwälte mbB

(57) **Abstract**

Examples of the present disclosure a wound type electrode assembly that includes a conductive layer formed on an electrode uncoated portion of an outermost side of the electrode assembly.

## Description

### BACKGROUND OF THE INVENTION

### (a) Field of the Invention

Example embodiments relate to an electrode assembly, and more particularly, to an electrode assembly for a rechargeable battery and a rechargeable battery including the same.

### (b) Description of the Related Art

A rechargeable battery is a power storage system providing improved, advantageous or desired energy density that may convert electrical energy into chemical energy to store the electrical energy. Compared to a primary battery that typically cannot be recharged, a rechargeable battery is typically rechargeable and is widely used in IT devices such as, e.g., smartphones, laptop computers, tablet PCs, and the like.

Recently, interest in electric vehicles has increased due to environmental issues and fossil fuel depletion issues, and accordingly, batteries of electric vehicles are used as rechargeable batteries.

Rechargeable batteries typically have advantageous characteristics such as high density and safety, and fast charging speeds such as rapid charging.

However, during rapid charging, the temperature of the rechargeable battery may also rapidly rise, resulting in poor safety.

### SUMMARY OF THE INVENTION

Example embodiments include an electrode assembly and a rechargeable battery including the same that may be safe by minimizing heat generation of the rechargeable battery even during rapid charging.

A technical problem to be solved by the example embodiments is not limited to the above, and other objects not mentioned herein will be understood from the following description by those skilled in the art.

An example embodiment of the present disclosure includes an electrode assembly that is configured of a wound type, and that includes a conductive layer formed on an electrode uncoated portion of an outermost side of the electrode assembly.

The conductive layer may be applied on the electrode uncoated portion.

The conductive layer may include at least one of a conductive material, a dispersion liquid, and a binder.

The conductive material may be or include carbon, the dispersion liquid may be or include methylpyrrolidone, and the binder may be or include polyvinylidene fluoride.

A thickness of the conductive layer may be about 50 % to about 90 % of that of the electrode uncoated portion.

The thickness of the conductive layer may be about 0.1 µm to about 100 µm.

The electrode assembly may be wound with a positive electrode, a separator, and a negative electrode overlapped, and an electrode uncoated portion of the positive electrode may be disposed at the outermost side of the electrode assembly.

The electrode uncoated portion of the positive electrode may be wound around the electrode assembly at least once.

A transverse cross-section of the electrode assembly may have an elliptical shape having a pair of flat portions facing each other and a pair of curved portions connecting the flat portions, and the conductive layer may be formed on each, or at least one, of the flat portions.

By forming an external conductive layer as in the example embodiments of the present disclosure, even when heat is generated during rapid charging, the heat may be quickly dissipated to the outside, providing a safe electrode assembly and a rechargeable battery including the same.

### BRIEF DESCRIPTION OF THE DRAWINGS

The accompanying drawings illustrate example embodiments of the present disclosure and together with the foregoing disclosure, serve to provide further understanding of the technical features thereof, and thus, the present disclosure is not construed as being limited to the drawing.
FIG. 1 illustrates a schematic perspective view of a rechargeable battery according to an example embodiment of the present disclosure.
FIG. 2 illustrates a schematic transverse cross-sectional view of the electrode assembly of FIG. 1.
FIG. 3 is a drawing for explaining a first electrode according to an example embodiment of the present disclosure.
FIG. 4 is a drawing for explaining a second electrode according to an example embodiment of the present disclosure.
FIG. 5 illustrates graphs measuring temperature change according to C-rate in Comparative Example and Example.

### DETAILED DESCRIPTION OF THE EMBODIMENTS

Hereinafter, example embodiments of the present invention will be described in detail with reference to the accompanying drawings. Prior to description, it should be understood that terms and words used in the specification and the appended claims should not be construed as having common and dictionary meanings, but should be interpreted as having meanings and concepts corresponding to technical ideas of the present disclosure in view of the principle that the inventor can properly define the concepts of the terms and words in order to describe his/her own invention as best as possible. Accordingly, since the example embodiment described in the specification and the configurations shown in the drawings are merely example embodiment and configurations of the present invention, it should be understood that that various equivalents and modified examples, which may replace the example embodiments, are possible.

It will be further understood that the terms "comprise, include," "comprising," and/or "including," when used in this specification, specify the presence of the stated features, integers, steps, operations, elements, and/or components but do not preclude the presence or addition of one or more other features, integers, steps, operations, elements, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

Although the terms "first," "second", and the like are used to describe various elements, these elements are not limited by these terms. These terms are used to distinguish one element from another, and unless stated to the contrary, a first element may be a second element.

Throughout the specification, unless stated otherwise, each element may be singular or plural.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, when the device in the figures is turned over, elements described as "below" or "beneath" or "under" other elements or features would then be oriented "above" the other elements or features. Thus, the example terms "below" and "under" can encompass both an orientation of above and below.

In addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

The terminology used herein is for the purpose of describing particular embodiments and is not intended to be limiting of the present disclosure.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

Hereinafter, a rechargeable battery according to an example embodiment of the present disclosure will be described in detail with reference to the accompanying drawings.

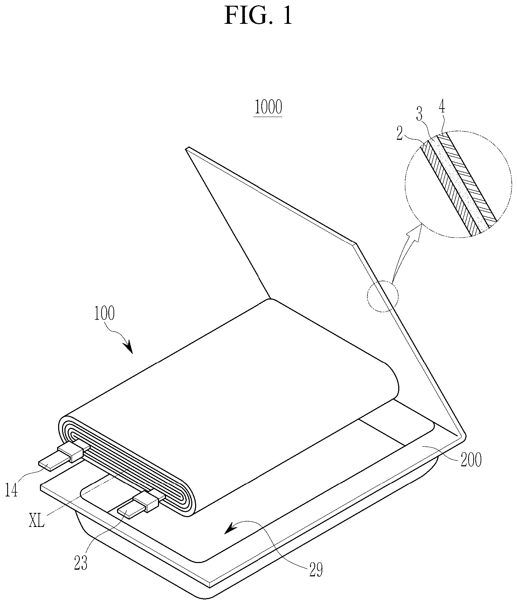

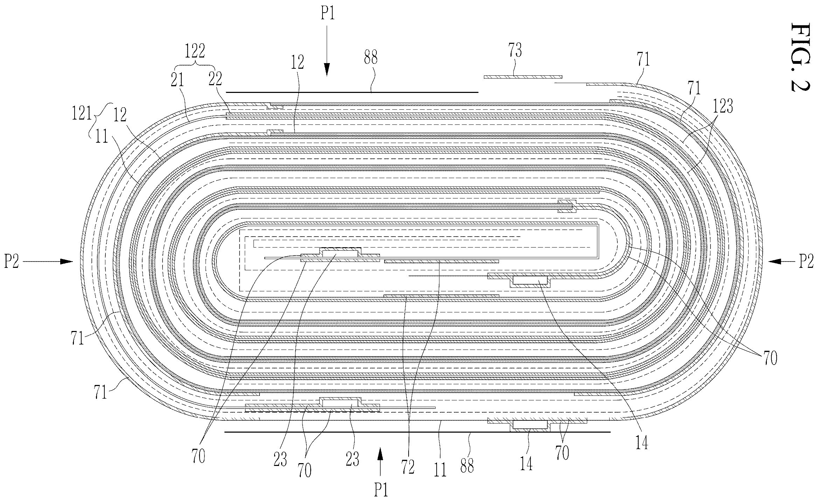

FIG. 1 illustrates a schematic perspective view of a rechargeable battery, according to an example embodiment of the present disclosure, and FIG. 2 illustrates a schematic transverse cross-sectional view of the electrode assembly of FIG. 1.

As shown in FIG. 1, a rechargeable battery 1000 according to an example embodiment of the present disclosure includes an electrode assembly 100 and a case 200.

Referring to FIG. 1 and FIG. 2, the electrode assembly 100 includes a first electrode 121, a second electrode 122, and a separator 123 disposed between the first electrode 121 and the second electrode 122. The separator 123 is for insulation, and the first electrode 121, the separator 123, the second electrode 122, and the separator 123 may be stacked in that order.

The electrode assembly 100 may have a jelly roll shape wound around a winding shaft XL in a state in which the first electrode 121, the separator 123, and the second electrode 122 are stacked. As necessary, the electrode assembly 100 may be wound and then pressed to be flat, and may have an elliptical shape, or a substantially elliptical shape, in which a cross-section cut in a vertical direction across the winding axis XL is long in one direction.

Accordingly, the electrode assembly 100 includes a flat portion P1 that is relatively flat and a curved portion P2 that is relatively round, in a cross-sectional view. The flat portion P1 may be a portion that is pressed after winding the electrode assembly 100, and the curved portion P2 may connect two flat portions facing each other. One rotation in the electrode assembly 100 may include a pair of flat portions P1 facing each other and a pair of curved portions P2 connected to ends of the flat portions P1.

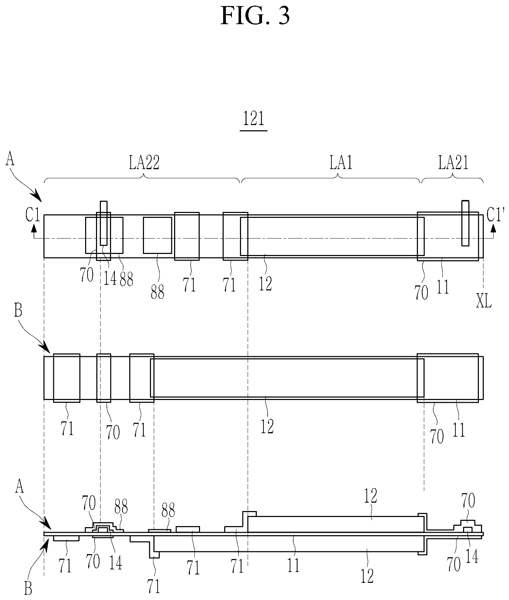

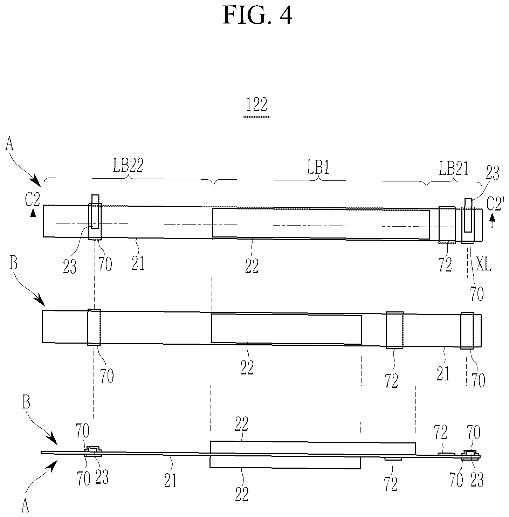

FIG. 3 is a drawing for explaining a first electrode according to an example embodiment of the present disclosure, and FIG. 4 is a drawing for explaining a second electrode according to an example embodiment of the present disclosure.

FIG. 3 sequentially illustrates a front plan view, a rear plan view, and a cross-sectional view of the first electrode 121, and FIG. 4 sequentially illustrates a front plan view, a rear plan view, and a cross-sectional view of the second electrode 122.

Referring to FIG. 2 to FIG. 4, the first electrode 121 includes a first electrode active portion LA1 and first electrode uncoated portions LA21 and LA22 respectively disposed at opposite sides of the first electrode active portion LA1, and the second electrode 122 includes a second electrode active portion LB1 and second electrode uncoated portions LB21 and LB22 respectively disposed at opposite sides of the second electrode active portion LA1.

Hereinafter, when the band-shaped first and second electrodes 121 and 122 are wound around the winding axis XL, the end portion adjacent to the winding axis XL is referred to as the tip, and the end portion located relatively far away is referred to as the end.

Referring to FIG. 2 and FIG. 3, the first electrode active portion LA1 of the first electrode 121 includes a first substrate 11 and a first active material layer 12 formed on at least one surface of the first substrate 11.

The first electrode uncoated area LA21 and LA22 includes a tip first electrode uncoated portion LA21 disposed at the tip of the first electrode 121 and an end second electrode uncoated portion LA22 disposed at the end of the first electrode 121.

Since no separate material layer is formed on the first substrate 11 of the tip first electrode uncoated portion LA21 and the end second electrode uncoated portion LA22, the surface of the first substrate 11 may be exposed, and a first electrode tab 14 for drawing a current to the outside may be connected on the first substrate 11 of the front and end first electrode uncoated portions LA21 and LA22, respectively.

The first electrode tab 14 may be connected to the first electrode uncoated portions LA21 and LA22 by, e.g., ultrasonic welding, laser welding, or resistance welding, and may protrude out of the first electrode uncoated portions LA21 and LA22. Like the first substrate 11, the first electrode tab 14 may include aluminum.

Hereinafter, the surface to which the first electrode tab 14 is attached is referred to as a front surface (A) of the first substrate 11, and the opposite surface is referred to as a rear surface (B) of the first substrate 11. A protective tape 70 for protecting the first electrode tab 14 is attached to the first electrode tab 14 in the first electrode uncoated portions LA21 and LA22, respectively. The protective tape 70 may be formed on both surfaces of the first substrate 11, respectively.

The first substrate 11 provides a passage for the movement of charges generated in the first active material layer 12, and supports the first active material layer 12.

The first electrode 121 may be a positive electrode, and the first substrate 11 may have a metal thin plate with improved, advantageous or desired conductivity, for example, an aluminum foil or a mesh structure.

The first active material layer 12 may be formed by dispersing an electrode mixture including a positive electrode active material, a binder, a conductive material, and the like, in a solvent to form a slurry, and then coating the slurry on both surfaces of the first substrate 11, drying and compressing the slurry.

As the positive electrode active material, a compound capable of reversible intercalation and deintercalation of lithium (lithiated intercalation compound) may be used. Specifically, the active material may be at least one composite oxide formed of a metal such as, e.g., cobalt, manganese, nickel, and a combination thereof and the lithium.

The composite oxide may be a lithium transition metal composite oxide, for example, a lithium nickel-based oxide, a lithium cobalt-based oxide, a lithium manganese-based oxide, a lithium iron phosphate-based compound, a cobalt-free nickel-manganese-based oxide, or a combination thereof.

For example, a compound represented by one of the following formulas may be used. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}GgPO₄(0.90≤a≤1.8, 0≤g≤0.5); Li_{(3-f)}Fe₂(PO₄)₃(0≤f≤2); LiₐFePO₄(0.90≤a≤1.8).

In the above formulas, A is or includes Ni, Co, Mn, or a combination thereof; X is or includes Al, Ni, Co, Mn, Cr, Fe, Mg, Sr, V, a rare earth element or a combination thereof; D is or includes O, F, S, P, or a combination thereof; G is or includes Al, Cr, Mn, Fe, Mg, La, Ce, Sr, V, or a combination thereof; L¹ is or includes Mn, Al, or a combination thereof.

A positive electrode for a lithium rechargeable battery may include a current collector and a positive electrode active material layer formed on the current collector. The positive electrode active material layer includes a positive electrode active material, and may further include a binder and/or a conductive material.

The content of the positive electrode active material may be about 90 wt% to about 99.5 wt% based on 100 wt% of the positive electrode active material layer, and the content of the binder and the conductive material may be about 0.5 wt% to about 5 wt% based on 100 wt% of the positive electrode active material layer, respectively.

Al may be used as the current collector, but is not limited thereto.

End portions of the first active material layer 12 formed on the front and rear surfaces (A) and (B) may be covered with a first finishing tape 71. The first finishing tape 71 may extend from an end portion of the first active material layer 12 to the curved portion P1 to be attached thereto.

In addition, in order to minimize the area in which the first substrate 11 is exposed in the end first electrode uncoated portion LA22 to hinder or prevent the first electrode 121 from being short-circuited with the second electrode 122, the first finishing tape 71 may be further formed at a portion where the positive electrode substrate and the negative electrode substrate come into contact, and the first finishing tape 71 may be disposed on the curved portion P2.

In addition, the end portion of the end first electrode uncoated portion LA22 may be fixed with a fixed tape 73 so as not to move or substantially move.

Meanwhile, a conductive layer 88 may be further formed on the outermost portion of the electrode assembly 100. Although the positive electrode is shown to be disposed at the outermost portion, example embodiments are not limited thereto, and the negative electrode may be disposed at the outermost portion. The end first electrode uncoated portion LA22 of the positive electrode may be wound around the electrode assembly at least once.

The conductive layer 88 may be formed on the end first electrode uncoated portion LA22 of the positive electrode disposed in the flat portion P1. The conductive layer 88 may be applied as a mixture of a conductive material and a dispersion liquid. The conductive material may be included in an amount of about 1 wt% to about 10 wt% of the dispersion liquid.

The conductive material may be or include carbon, and the dispersion liquid may be or include methylpyrrolidone. The dispersion liquid may further include a binder, and the binder may be polyvinylidene fluoride. The binder may be included in an amount of more than 0 wt% and about 2 wt% or less.

The conductive layer 88 may be formed to have a thickness of about 0.1 µm to about 100 µm, and the conductive layer 88 may be formed to have an area of about 50 % to about 90 % of the area of the end electrode uncoated portion LB22.

Referring to FIG. 2 and FIG. 4, the second electrode active portion LB1 includes a second substrate 21 and a second active material layer 22 formed on at least one surface of the second substrate 21.

The second electrode uncoated portions LB21 and LB22 include a tip second electrode uncoated portion LB21 and an end second electrode uncoated portion LB22 respectively disposed at the tip and end of the second electrode 122. In the tip second electrode uncoated portion LB21 and the end second electrode uncoated portion LB22, since a separate material layer is not formed on the second substrate 21, the surface of the second substrate 21 may be exposed, and the second electrode tab 23 for drawing a current to the outside may be connected thereto, respectively.

The second electrode tab 23 may be connected to the second electrode uncoated portions LB2 by, e.g., ultrasonic welding, laser welding, or resistance welding, and may protrude out of the second electrode uncoated portion LB2. The second electrode tab 23 may be made of or include nickel.

A protective tape 70 for protecting the second electrode tab 23 is attached to the second electrode tab 23, respectively. The protective tape 70 may be formed on both surfaces of the second substrate 21, respectively.

In addition, a short circuit prevention tape 72 may be further formed in a portion corresponding to the first electrode uncoated portion in order to hinder or prevent a short circuit from occurring by overlapping the first electrode uncoated portion in which the first electrode tab 14 is formed during winding on the tip second electrode uncoated portion LB21
The second substrate 21 provides a passage for the movement of charges generated in the second active material layer 22 and supports the second active material layer 22.

The second electrode 122 may be a negative electrode, and the second substrate 21 may have a metal thin plate with improved, advantageous or desired conductivity, for example, a copper foil or nickel foil, or a mesh.

The second active material layer 22 may be formed by dispersing an electrode mixture including a negative electrode active material, a binder, a conductive material, and the like in a solvent to form a slurry, and then coating the slurry on at least one surface of the second substrate 21, drying and compressing the slurry.

The negative electrode active material includes a material capable of reversibly intercalation/deintercalating, e.g., lithium ions, lithium metal, an alloy of lithium metal, a material capable of being doped and undoped on lithium, or a transition metal oxide.

The material capable of reversibly intercalating/deintercalating lithium ions is or includes a carbon-based negative electrode active material, and may include, for example, crystalline carbon, amorphous carbon, or a combination thereof. Examples of the crystalline carbon may include graphite such as natural graphite or artificial graphite, and examples of the amorphous carbon may include soft carbon or hard carbon, mesophase pitch carbide, fired coke, and the like.

As a material that may be doped and dedoped in the lithium, Si-based negative electrode active material or Sn-based negative electrode active material may be used. The Si-based anode active material may be silicon, a silicon-carbon composite, SiOx (0<x<2), a Si-based alloy, or a combination thereof.

The silicon-carbon composite may be or include a composite of silicon and amorphous carbon. According to the example embodiment, the silicon-carbon composite may be or include silicon particles and may have a form in which amorphous carbon is coated on the surface of the silicon particles.

The silicon-carbon composite may further include crystalline carbon. For example, the silicon-carbon composite may include a core including crystalline carbon, and silicon particles and an amorphous carbon coating layer disposed on the surface of the core.

A negative electrode for a lithium rechargeable battery includes a current collector and a negative electrode active material layer disposed on the current collector. The negative electrode active material layer includes a negative electrode active material, and may further include a binder and/or a conductive material.

For example, the negative electrode active material layer may include about 90 wt% to about 99 wt% of the negative electrode active material, about 0.5 wt% to about 5 wt% of the binder, and about 0 wt% to about 5 wt% of the conductive material.

As the binder, a non-aqueous binder, an aqueous binder, a dry binder, or a combination thereof may be used. When the aqueous binder is used as the negative electrode binder, a cellulose-based compound that may impart viscosity may be further included.

The negative electrode current collector may include at least one of a copper foil, a nickel foil, a stainless steel foil, a titanium foil, a nickel foam, a copper foam, a polymer substrate coated with a conductive metal, and a combination thereof.

An electrolyte for a lithium rechargeable battery includes at least a non-aqueous organic solvent and a lithium salt.

The non-aqueous organic solvent may be or constitute a medium through which ions involved in the electrochemical reaction of the battery may move.

The non-aqueous organic solvent may be or include a carbonate-based, ester-based, ether-based, ketone-based, or alcohol-based solvent, an aprotic solvent, or a combination thereof, or may be used alone or in a mixture of two or more types.

In addition, when using a carbonate-based solvent, a mixture of cyclic carbonate and chain carbonate may be used.

Depending on the type of lithium rechargeable battery, a separator may exist between the positive electrode and the negative electrode. As the separator, e.g., at least one of polyethylene, polypropylene, polyvinylidene fluoride, or a multilayer film of two or more layers thereof may be used.

The separator may include a porous substrate and a coating layer including an organic material, an inorganic material, or a combination thereof, which is disposed on one surface or both surfaces of the porous substrate.

The organic material may include a polyvinylidene fluoride-based polymer or a (meth)acrylic-based polymer.

The inorganic material may include inorganic particles such as, e.g., at least one of Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto.

The organic material and the inorganic material may be mixed and present in one coating layer, or may be present in a form in which a coating layer including the organic material and a coating layer including the inorganic material are stacked.

The separator 123 is disposed between the first electrode 121 and the second electrode 122 and hinders or prevents a short circuit therebetween.

The separator 123 may be formed of or include a porous film having high ion permeability and mechanical strength. For example, the separator 123 may be formed of or include an olefin-based polymer such as, e.g., at least one of polyethylene or polypropylene. The separator extends more than the first electrode active portion LA1 or the second electrode active portion LB1 in the longitudinal direction or the width direction, thereby hindering or preventing a short circuit from occurring between the first electrode active portion LA1 and the second electrode active portion LB1 due to thermal contraction.

The electrode assembly 100 may be accommodated in the pouch-type case 200 together with an electrolyte.

The electrolyte includes a non-aqueous organic solvent and a lithium salt. The non-aqueous organic solvent serves as a medium through which ions involved in the electrochemical reaction of the battery may move.

The lithium salt is or includes a substance that dissolves in an organic solvent and acts as a supply source of lithium ions in the battery, enabling the basic operation of a lithium rechargeable battery and promoting the movement of lithium ions between the positive electrode and the negative electrode. Representative examples of the lithium salt include one or two or more of LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, for example, integers from 1 to 20), LiCl, Lil, and LiB(C₂O₄)₂ (lithium bis(oxalato) borate (LiBOB)), as a supporting electrolytic salt. The concentration of the lithium salt may be in a range of about 0.1 M to about 2.0 M. When the concentration of the lithium salt is included within the above range, an improved, advantageous or desired electrolyte performance may be provided because the electrolyte has appropriate conductivity and viscosity, and lithium ions may effectively move.

The pouch-type case 200 may be formed of or include a laminate exterior material, and the laminate exterior material may be formed of or include, for example, a multi-layered structure having a first insulating layer 2, a metal layer 3, and a second insulating layer 4. According to various examples, various adhesive layers or functional layers may be further added.

The first insulating layer 2 may be formed of or include a material having insulating and thermal adhesive properties on the inner surface of the laminate exterior material, and may be sealed by heat-welding the edge thereof while the electrode assembly 100 is accommodated in a accommodating portion 29 of the pouch-type case 200. In addition, the first insulating layer 2 may be formed on one surface of the metal layer 3, and may form the inner surface of the laminate exterior material facing the electrode assembly 100. The first insulating layer 2 may be formed of or include cast polypropylene (CPP) or an equivalent thereof that does not substantially react with the electrolyte.

As described above, when the conductive layer is formed on the outermost side of the electrode assembly, as in an example embodiment of the present disclosure, the temperature of the rechargeable battery may not rapidly increase even during rapid charging.

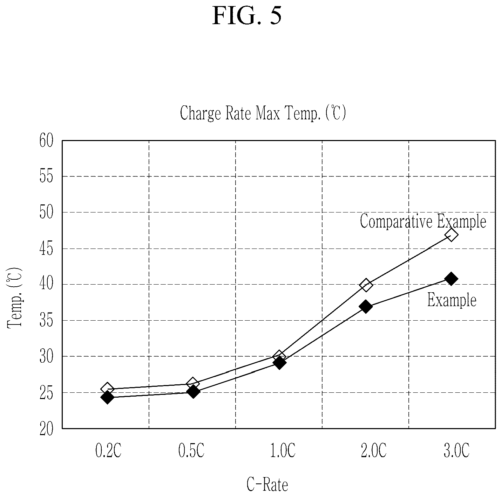

FIG. 5 illustrates graphs measuring a temperature change according to C-rate in Comparative Example and Example.

Comparative Example is a recharge battery, according to the prior art, that does not include a conductive layer, while Example is the rechargeable battery according to the example of the present disclosure shown in FIG. 3 that has a conductive layer formed on the outermost electrode uncoated portion.

Referring to FIG. 3, it can be seen that the temperature in both Comparative Example and Example increases as the C-rate increases. However, it can be seen that the temperature increase of Example is less than the temperature increase of Comparative Example from when the C-rate exceeds 1.0 °C.

That is, it can be seen that at the same C-rate, Example has a temperature that is about 1 °C to 10 °C lower than the temperature of Comparative Example.

As described above, when the conductive layer is formed as in an example embodiment of the present disclosure, an increase in temperature during charging may be reduced, thereby providing a safe or safer rechargeable battery.

In the above example embodiment, the rechargeable battery including a prismatic case has been described, but the examples of the present disclosure are not limited thereto, and the rechargeable battery may include a pouch-type case.

While this disclosure has been described in connection with what is presently considered to be practical example embodiments, it is to be understood that the disclosure is not limited to the disclosed example embodiments, but, on the contrary, is intended to cover various modifications and equivalent arrangements included within the scope of the appended claims.

### <Description of Symbols>

14, 23: electrode tab
70: protective tape
71: first finishing tape
72: short circuit prevention tape
73: fixed tape
88: conductive layer
121: first electrode
122: second electrode
123: separator

## Claims

1. A wound type electrode assembly (100) comprising:
a conductive layer (88) formed on an electrode uncoated portion (LA22) of an outermost side of the electrode assembly (100).

2. The electrode assembly (100) of claim 1, wherein the conductive layer (88) is formed on the electrode uncoated portion (LA22) by applying a mixture on the electrode uncoated portion (LA22).

3. The electrode assembly (100) according to any of the previous claims, wherein the conductive layer (88) comprises a conductive material, a dispersion liquid, and a binder.

4. The electrode assembly (100) of claim 3, wherein the conductive material comprises carbon.

5. The electrode assembly (100) of claim 3 or 4, wherein:
the dispersion liquid comprises methylpyrrolidone, and
the binder comprises polyvinylidene fluoride.

6. The electrode assembly (100) according to any of the previous claims, wherein a thickness of the conductive layer (88) is 50 % to 90 % of a thickness of the electrode uncoated portion (LA22).

7. The electrode assembly (100) according to any of the previous claims, wherein the thickness of the conductive layer (88) is 0.1 µm to 100 µm.

8. The electrode assembly (100) according to any of the previous claims, wherein:
the electrode assembly (100) is wound with a positive electrode (121), a separator (123), and a negative electrode (122) overlapped, and
the electrode uncoated portion (LA22) is an electrode uncoated portion (LA22) of the positive electrode (121), and is disposed at the outermost side of the electrode assembly (100).

9. The electrode assembly (100) of claim 8, wherein the electrode uncoated portion (LA22) of the positive electrode (121) is wound around the electrode assembly (100) at least once.

10. The electrode assembly (100) according to any of the previous claims, wherein
a transverse cross-section of the electrode assembly (100) has an elliptical shape with a pair of flat portions (P1) facing each other and a pair of curved portions (P2) connected to the flat portions (P1), and
the conductive layer (88) is formed on at least one of the flat portions (P1).

11. A rechargeable battery (1000) comprising:
the electrode assembly (100) of any of claims 1 to 10, and
a case (200) accommodating the electrode assembly (100) with an electrolyte therein.

12. The rechargeable battery (1000) of claim 11, wherein the case (200) is a pouch-type case.
